# FASCICULE DE BREVET EUROPEEN

(11) **EP 0 681 996 B1**
(45) Date de publication et mention de la délivrance du brevet: **25.07.2001**
(21) Numéro de dépôt: 95450005.4
(22) Date de dépôt: 03.05.1995
(51) Int. Cl.: C03B 37/15, C03B 11/14, C03B 19/06, C03C 14/00

(54) **Procédé de réalisation de pièces de tôlerie complexes en matériau composite par pressage multiaxial isostatique, outillage pour sa mise en oeuvre et structures ainsi obtenues**
Verfahren zum Herstellen von komplexen Kompositplatten durch multiaxial isostatisches Pressen, Werkzeuge dafür und Strukturen so erhalten
Method for making complex composite sheets by multiaxial isostatic pressing, tools used therefor and the structures so obtained

(30) Priorité: 06.05.1994 FR 9405860
(43) Date de publication de la demande: 15.11.1995
(73) Titulaire: AEROSPATIALE Société Nationale Industrielle, 75781 Paris Cédex 16 (FR)
(72) Inventeur: Larnac, Guy, F-33160 Saint Medard en Jalles (FR); Darrieux, Jean-Louis, F-33160 Saint Medard en Jalles (FR)
(74) Mandataire: Thébault, Jean-Louis

(56) Documents cités:
- EP-A- 0 426 352
- EP-A- 0 501 729
- EP-A- 0 509 178
- EP-A- 0 546 877
- WO-A-85/04835
- FR-A- 2 684 369
- US-A- 4 961 771
- US-A- 5 122 176

## Description

La présente invention a trait à la tôlerie complexe en matériau composite et plus précisément à la réalisation de structures ou pièces monoblocs formées d'une ou plusieurs parties d'épaisseur relativement mince, incurvées et/ou planes et pouvant former entre elles divers angles, droits ou non, la paroi desdites parties étant formée d'une ou plusieurs couches de fibres noyées dans une matrice vitreuse ou vitro-céramique.

On sait déjà réaliser des plaques planes ou bombées en matériau composite du type à matrice vitreuse ou vitro-céramique renforcée de fibres, par exemple des fibres de verre, de silice, de carbone ou des fibres céramiques, pré-imprégnées, disposées en couches simples ou multiples, par exemple sous forme d'un drapage de tissus dans une forme, puis soumises à un pressage uniaxial à haute température dans un four-presse approprié.

Les structures composites ainsi obtenues sont susceptibles de résister à des contraintes mécaniques et thermiques très élevées.

Cette technique ne permet cependant pas de réaliser des pièces de tôlerie complexes ou profilées, c'est-à-dire des pièces présentant des éléments disposés dans plusieurs plans, telles que, par exemple, des éléments plans à bords rabattus, à nervures de renfort ou à caissons.

Dans la demande de brevet français N° 2717735 déposée au nom de la Demanderesse, on propose une technique de réalisation de telles pièces de tôlerie par pressage sous haute température, à l'aide d'un four-presse à pressage mécanique uniaxial, des différentes parties suivant un axe de pressage perpendiculaire à ces parties. A cet effet, on décompose l'effort uniaxial de pressage à l'aide d'un jeu de pièces à surfaces en coin dont les faces actives sont planes ou légèrement incurvées.

Cette technique ne permet cependant pas de réaliser des structures compartimentées complexes et présentant des parties à courbures accusées ou évolutives.

La présente invention vise précisément à proposer une technique notamment appropriée à de telles structures complexes.

A cet effet, l'invention a pour objet un procédé de réalisation de pièces de tôlerie complexes en matériau composite, constituées d'un élément monobloc comportant au moins deux parties d'épaisseur relativement mince, incurvées et/ou planes et formant entre elles un angle, quel procédé consiste :
- à réaliser un moule complexe comprenant un élément rigide et un élément déformable, tous deux de forme complémentaire correspondant à la pièce finale,
- à réaliser par drapage sur l'un des deux éléments dudit moule, une préforme de la pièce à obtenir, à l'aide de fibres pré-imprégnées d'une résine vitreuse ou vitro-céramique,
- à assembler de manière étanche les deux éléments du moule pour former une enceinte contenant ladite pré-forme,
- à soumettre l'ensemble à une élévation contrôlée de la température jusqu'à une valeur pouvant atteindre 1500°C et la pression jusqu'à une valeur pouvant atteindre 1000 bars, en sorte de plaquer la pré-forme contre l'élément rigide du moule,
- puis, à ramener les pression et température aux valeurs ambiantes, de manière contrôlées en sorte d'obtenir une vitrification ou céramisation optimale,
- et enfin, à démouler la pièce ainsi obtenue.

Suivant un mode de mise en oeuvre du procédé destiné plus particulièrement à l'obtention d'une pièce comprenant une partie d'épaisseur relativement mince, incurvée ou plane, et une ou plusieurs nervures de renfort sur l'une de ses faces, on drape sur l'élément rigide du moule ladite partie d'épaisseur relativement mince, on met ensuite en place, également par drapage, sur ladite partie, la ou les nervures, on met en place sur l'élément rigide l'élément déformable, qui est constitué d'une feuille mince conformée pour épouser la ou les nervures, puis, on effectue lesdites opérations de pressage à hautes pression et température.

Suivant un autre mode de mise en oeuvre du procédé, plus particulièrement destiné à la réalisation d'une pièce comportant un ou plusieurs compartiments ouverts ou fermés, on réalise pour chaque compartiment un drapage sur un support mince déformable constituant une partie de l'élément déformable du moule complexe, puis on dispose les supports drapés côte à côte et on les assemble au droit de leur parties non drapées avec ledit élément rigide du moule, et on effectue lesdites opérations de pressage à hautes pression et température.

Les deux éléments du moule complexe sont avantageusement métalliques et l'élément déformable est de préférence une feuille mince.

Le plaquage sous très forte pression par une telle feuille métallique de la pré-forme sur la partie rigide indéformable du moule garantit une excellente régularité, à la fois de la planéité de surface des parties de la pièce et de leur épaisseur qui peut être ainsi parfaitement maîtrisée.

Le drapage pour obtenir la pré-forme peut s'opérer à partir d'éléments de tissus de fibres pré-imprégnées ayant déjà subi un compactage ainsi qu'une pyrolyse. Mais, avantageusement, on peut partir de tissus non pyrolisés.

A cet effet, l'intérieur du moule est relié à une source de vide permettant non seulement la pyrolyse des fibres pré-imprégnées avec évacuation des liants de la résine, mais éventuellement le compactage préalable desdits tissus, si un tel compactage n'avait pas été déjà opéré.

L'ensemble des opérations de compactage, pyrolyse et pressage à hautes température et pression peut être avantageusement effectué dans une presse isostatique à haute température et haute pression, dénommée ci-après hyperclave, capable de produire du vide.

Les fibres utilisables conformément à l'invention sont par exemple des fibres de verre, de silice, de carbone, de SiCO, de SiCN, des fibres céramiques, ou autres.

La matrice vitreuse ou vitro-céramique peut être constituée par exemple d'au moins un oxyde de type SiO₂, Al₂O₃, ZᵣO₂, B₂O₃, ou d'oxydes alcalins ou alcalino-terreux.

La pré-forme est constituée d'une ou plusieurs couches de fibres longues ou courtes, agencées suivant des structures de tout type, par exemple des tissus, des mats, des mèches, des feutres, etc...

A titre d'exemple, les fibres utilisées pour constituer une pré-forme sont des tissus de fibres de SiC pré-imprégnées de verre.

L'invention concerne également un outillage utilisable dans la mise en oeuvre du procédé de l'invention, selon la revendication 5, et une pièce de tôlerie selon la revendication 7.

L'invention permet ainsi de réaliser des structures en matériau composite complexes et notamment des structures à nervures de renfort ou à compartiments, ouverts ou fermés et à parois densifiées suivant des épaisseurs et des taux de compression pré-déterminés, d'une tenue remarquable mécaniquement et en température, de manière rapide, précise, sûre et à l'aide d'un outillage qui peut être presqu'entièrement réutilisable.

D'autres caractéristiques et avantages ressortiront de la description qui va suivre du procédé et de divers outillages pour sa mise en oeuvre, description donnée à titre d'exemple uniquement et en regard des dessins annexés sur lesquels :
- Figure 1 représente schématiquement en perspective une pièce cylindrique à nervure intérieure de renfort, réalisable avec le procédé de l'invention ;
- Figure 2 est une vue partielle illustrant la réalisation de la pièce de la figure 1 conformément au procédé de l'invention ;
- Figure 3 représente schématiquement en perspective une pièce profilée, creuse, compartimentée, de forme générale parallélépipédique ;
- Figures 4 et 5 illustrent deux stades de la réalisation de la pièce de la figure 3 ;
- Figures 6 et 7 sont des vues en coupe partielle du moule de la figure 5 illustrant la position des éléments de la pré-forme, respectivement avant et après pressage ;
- Figure 8 est une vue similaire à celle de la figure 3 représentant un panneau fortement cintré muni de nervures internes de renfort ;
- Figures 9 et 10 illustrent deux stades de réalisation de la pièce de la figure 8 ;
- Figure 11 représente une vue en perspective d'un panneau cintré muni intérieurement de nervures de renfort, et
- Figures 12 et 13 illustrent deux stades de réalisation de la pièce de la figure 11.

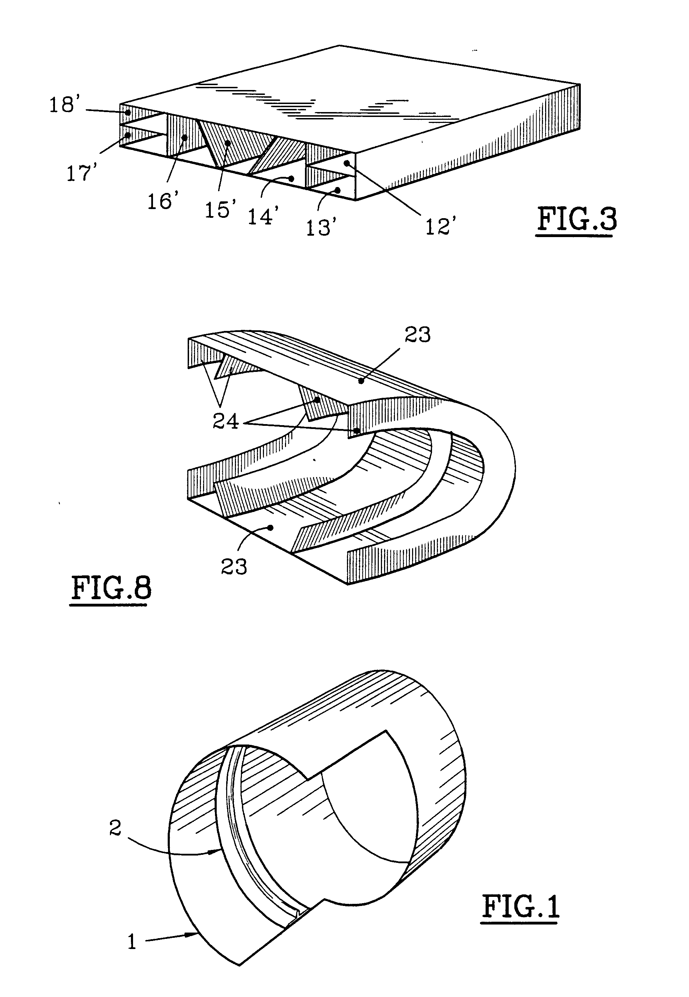

La figure 1 représente typiquement une pièce 1 en matériau composite réalisable à l'aide du procédé de l'invention. Cette pièce 1 est cylindrique, de paroi relativement mince et est munie intérieurement d'une nervure de renfort 2 constituée par une partie annulaire à section en T rapportée sur la face interne de la pièce. Les deux parties 1 et 2 sont constituées à partir de fibres drapées, par exemple du tissu de fibres de carbure de silicium pré-imprégnées de verre, disposé suivant plusieurs couches jusqu'à l'obtention de l'épaisseur désirée.

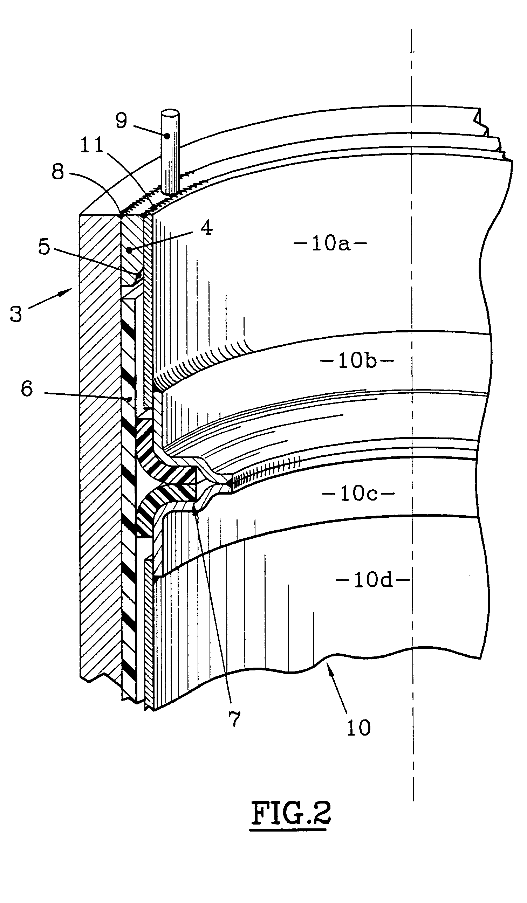

On va maintenant se reporter à la figure 2 pour décrire un mode de mise en oeuvre du procédé de l'invention approprié à la réalisation d'un pièce du type de la figure 1.

Conformément à l'invention, on réalise un moule complexe comprenant un élément ou partie rigide, indéformable et un élément deformable, les deux éléments étant assemblés de façon à emprisonner une pré-forme de la pièce, réalisée par drapage, et qui sera, au cours d'un pressage isostatique à haute pression et haute température, plaquée par l'élément déformable du moule contre l'élément indéformable, les faces internes du moule en contact avec la pré-forme étant bien entendu conformées ou adaptées au type de pièce à réaliser.

Sur la figure 2, on a représenté en 3 un manchon cylindrique comportant une paroi épaisse, d'une dizaine de millimètres par exemple, d'un matériau métallique approprié, tel qu'un alliage de molybdène pour hautes températures, de l'"Inconel" ou de l'acier inoxydable, selon la température de fusion du verre de la matrice du matériau composite.

A l'intérieur du manchon 3, aux deux extrémités, est introduite une pièce annulaire 4 en même matériau que le manchon 3, dont l'extrémité interne est biseautée en 5.

Le manchon 3 et les anneaux 4 constituent l'élément ou partie rigide, indéformable d'un moule complexe.

Une pré-forme 6 correspondant à la pièce de la figure 1, avec une nervure intérieure 7 correspondant à la nervure 2, est mise en place à l'intérieur du manchon 3. La pré-forme est réalisée par drapage de tissu du type mentionné plus haut, soit sur une forme externe en graphite (non représentée), soit directement à l'intérieur du manchon 3.

Dans le cas de la forme externe, après mise en place des tissus, l'ensemble est mis sous vessie, à la manière connue, pour réaliser un compactage par exemple sous une pression de 1 bar, obtenue par mise sous vide de la vessie à une température de 120°C environ. Ensuite, la vessie est retirée et une pyrolyse de la pré-forme sur son outillage est effectuée, toujours à la manière connue, pour éliminer les liants qui maintenaient la poudre de verre sur les tissus.

La pré-forme est alors retirée de l'outillage et introduite dans le manchon cylindrique 3 dont l'un des anneaux 4 est déposé pour permettre l'insertion de ladite pré-forme (6), puis refixé au manchon 3 par exemple par une soudure 8.

Si la pré-forme 6 est directement drapée à l'intérieur du manchon 3, l'un des anneaux 4 est muni d'un conduit à vide 9 communiquant, par un perçage ménagé dans l'anneau, avec l'espace intérieur du moule dont l'élément déformable est formé d'une chemise mince interne 10 constituée à l'aide de plusieurs parties 10a, 10b, 10c, 10 d, rapportées et soudées pour épouser de manière étanche toutes les faces visibles de la pré-forme 6. Les deux parties du moule sont ensuite soudées en 11. Ainsi, les diverses parties de la chemise interne 10 comprimeront toutes les parties en regard de la pré-forme 6, y compris la nervure 7.

Les divers éléments 10a à 10d sont conformés et dimensionnés en fonction de la morphologie de la nervure 7.

Le conduit à vide 9 permet de réaliser les opérations préalables de compactage et pyrolyse indiquées plus haut, si ces dernières n'ont pas déjà été faites.

La chemise interne 10 est en même métal que la partie indéformable (3,4) du moule.

L'ensemble représenté en figure 2 est alors soumis à un pressage isostatique sous haute pression et haute température dans un hyperclave.

Si l'hyperclave ne produit pas de vide, après compactage et pyrolyse de la préforme 6 (en dehors de l'hyperclave), le conduit 9 est pincé et soudé, puis l'ensemble est placé dans l'hyperclave.

La température dans l'hyperclave est montée jusqu'à la température de ramollissement de la poudre de verre. A ce moment, on exerce dans l'hyperclave la pression nécessaire au plaquage de la paroi mince déformable 10 contre la pré-forme 6, ce qui permet son écrasement contre la paroi interne du manchon 3. Il est à noter que l'épaisseur des anneaux 4 est légèrement supérieure à celle de la pré-forme 6, ces anneaux, grâce au biseau 5, évitant à la fois le pincement des bords de la pré-forme et le déchirage de la paroi mince 10 appliquée contre cette dernière. L'épaisseur de paroi de la pré-forme 6 peut ainsi passer par exemple de 6 à 2 mm. Les températures et pressions mises en jeu dépendent de la nature. de la matrice vitreuse ou vitro-céramique du matériau composite et des nature et dimension de ladite chemise mince interne.

Ensuite, on contrôle les descentes en pression et en températures de façon à maîtriser la vitrification ou céramisation de la matrice.

A la fin de la vitrification ou céramisation, la pièce 6 est retirée de l'outillage, après usinage des zones de soudure (8,11) et retrait des pièces 4 et 10 et la pièce 6 est usinée à ses extrémités aux dimensions de la pièce finale 1.

Il est à noter que l'outillage (3,4) peut être réutilisé avec une nouvelle chemise interne 10.

Suivant une variante du procédé ci-dessus utilisée dans le cas où l'on dispose d'un hyperclave capable d'engendrer également un vide, on peut réaliser directement la pré-forme 6 sur la face interne du manchon 3.

Les pièces 4 et 10 sont ensuite mises en place, l'ensemble est placé dans l'hyperclave afin de réaliser, par mise sous vide de l'appareil, lesdits compactage et pyrolyse, le tube 9 étant bien entendu non obturé.

Ensuite, après avoir obturé le tube 9, on replace l'ensemble dans l'hyperclave et on porte la température jusqu'au ramollissement de la poudre de verre. A ce moment, on exerce, comme dans le cas précédent, la pression nécessaire pour plaquer la chemise déformable 10 contre la pré-forme 6.

La vitrification ou céramisation de la matrice du matériau composite est contrôlée comme précédemment et la pièce en forme 6 est retirée, puis usinée aux dimensions.

L'outillage (3,4) est bien entendu réutilisable.

Il est préférable de diposer la pré-forme 6 à l'intérieur du manchon 3 plutôt qu'à l'extérieur, car il vaut mieux exercer sur les fibres de la pré-forme cylindrique 6 une pression centrifuge qu'une pression centripète qui risquerait de provoquer des plis dans les tissus.

Une expansion centrifuge des tissus présente en outre l'intérêt de tendre les fibres.

La pièce finale obtenue présente une paroi densifiée d'égale épaisseur, le degré de densification dépendant de la valeur de la pression créée dans l'hyperclave.

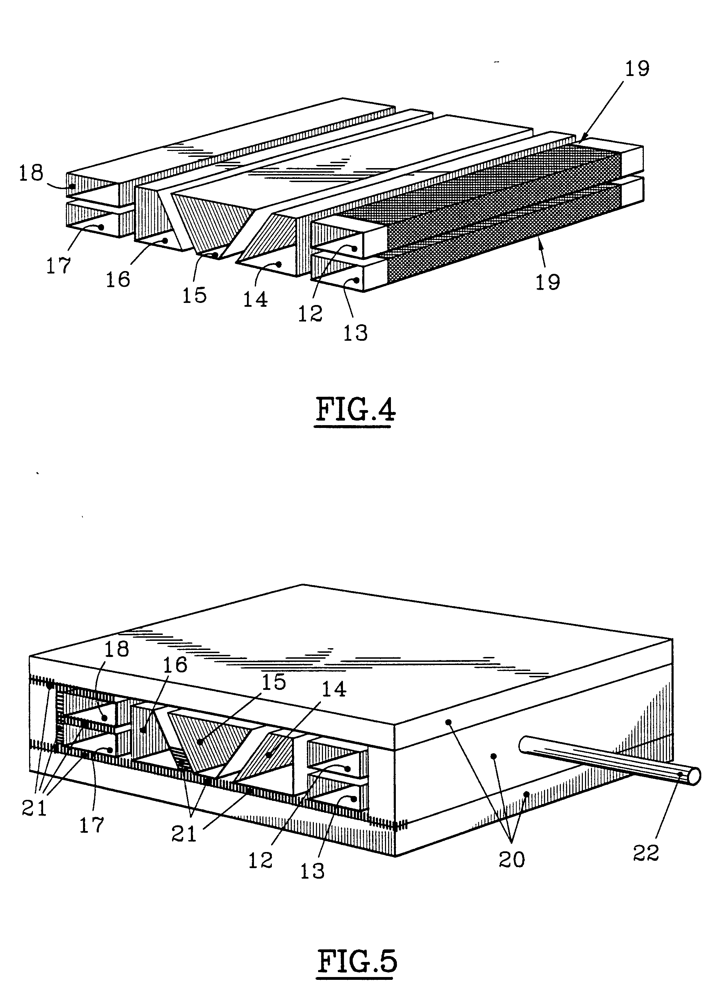

La figure 3 représente une pièce profilée, creuse, compartimentée, de forme générale parallélépipédique.

Pour réaliser cette pièce, on drape (figure 4) indépendamment sur des profilés creux 12 à 18 de forme correspondant aux compartiments distincts 12' à 18' de la pièce de la figure 3, des fibres pré-imprégnées 19.

Les profilés drapés 12 à 18, convenablement placés côte à côte (figure 5), sont entourés sur leurs flancs d'une paroi épaisse non déformable 20 en sorte de laisser libre les extrémités des profilés 12 à 18 qui sont par exemple dans le même métal que la chemise 10.

Les profilés 12 à 18 sont des tubes à paroi mince, ouverts à leurs deux extrémités et du même métal que les pièces 20.

Auxdites extrémités des profilés 12 à 18 sont réalisés des cordons de soudure 21 entre les profilés ainsi qu'entre ceux-ci et l'enveloppe externe 20. Un conduit 22 fait communiquer l'extérieur avec l'espace intersticiel entre la face interne de l'enveloppe 20 et les faces externes des divers profilés.

L'outillage de la figure 5 s'utilise exactement comme celui de la figure 2 dans un hyperclave à pression et vide réalisant à la fois le compactage de la pré-forme constituée par l'ensemble des drapages 19, la pyrolyse, puis le pressage isostatique à haute pression et haute température.

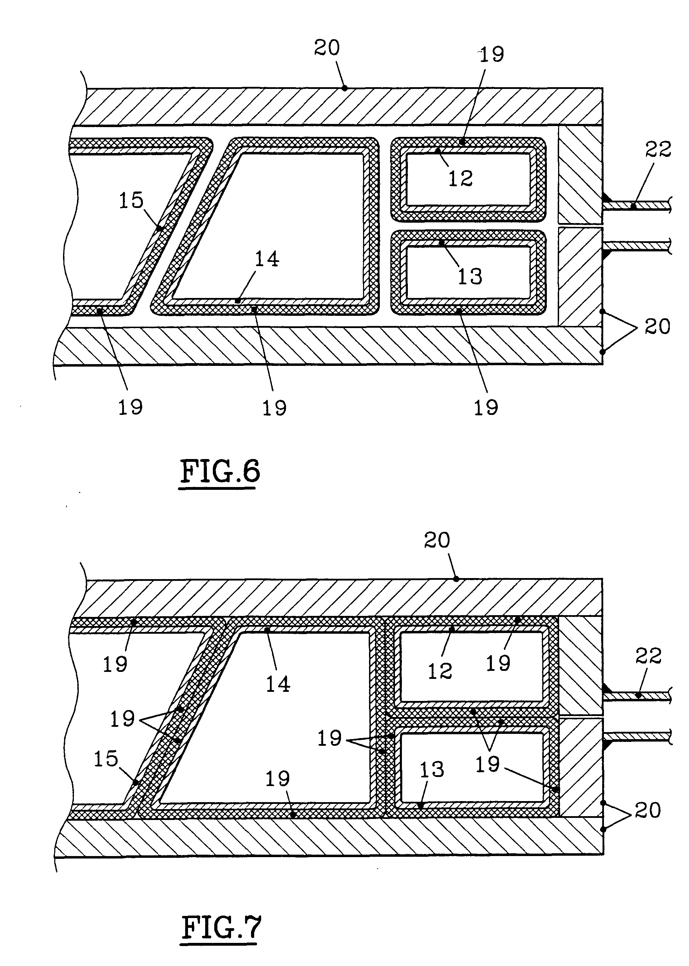

La figure 6 illustre la position dans le moule des divers drapages 19 sur leurs profilés 12 à 18, avant compactage et la figure 7 illustre ces mêmes drapages et profilés en fin de pressage dans l'hyperclave. Pour le compactage et la pyrolyse, le conduit 22 est relié à une source de vide et pour le pressage en hyperclave le conduit 22 est préalablement obturé.

L'expansion des profilés 12 à 18 à paroi déformable plaque les drapés 19 contre la paroi interne de la partie indéformable 20 du moule ou contre un drapage 19 adjacent, en sorte de constituer les diverses parois ou cloisons de la structure compartimentée de la figure 3.

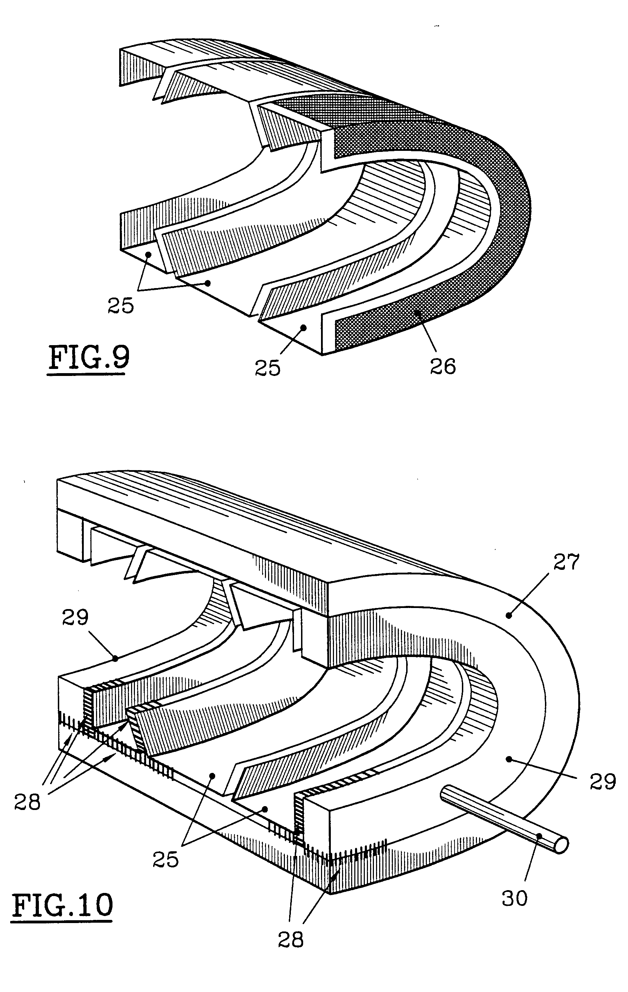

La pièce de la figure 8 est constituée d'un panneau fortement cintré 23 et muni de nervures internes de renfort 24.

Les figures 9 et 10 représentent un outillage selon l'invention adapté à cette pièce.

Cet outillage est formé d'un moule comprenant une partie déformable constituée de profilés ouverts en forme d'auges cintrées 25 correspondant aux compartiments ouverts ménagés sur la face interne du panneau 23. Sur la face externe des profilés 25 sont drapés des tissus de fibres pré-imprégnées 26.

L'ensemble est placé à l'intérieur d'une partie non déformable 27 du moule correspondant au panneau 23. Les profilés 25 sont à paroi mince et du même métal que la partie 27.

L'étanchéité des zones où se trouvent les drapages 26 est assurée par des cordons de soudure 28 le long des bords des profilés 25 et entre ces derniers et la partie 27 ainsi que les pièces d'extrémité 29. Enfin, un conduit 30 relie l'extérieur à l'espace interne occupé par les fibres pré-imprégnés.

Le moule de la figure 10 est utilisé comme celui de la figure 5 et de la même manière que celle illustrée par les figures 6 et 7, les drapages 26 vont être plaqués contre la face en regard de la partie indéformable 27 ou contre un drapage en regard, du fait de la déformation des parties minces 25 dans l'hyperclave.

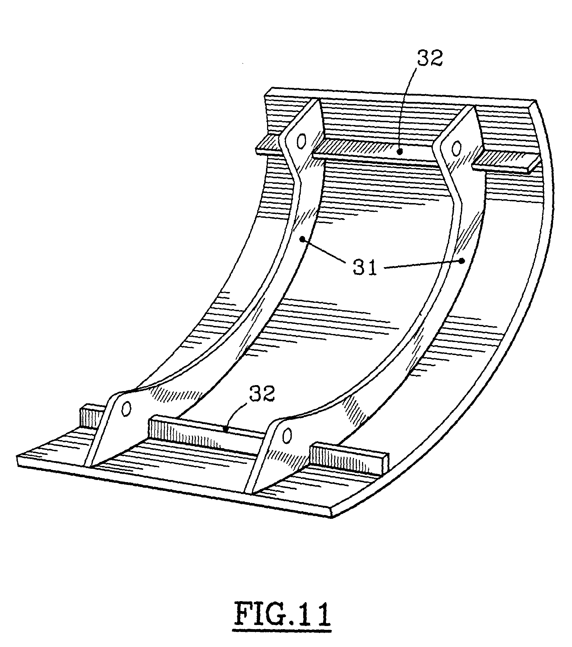

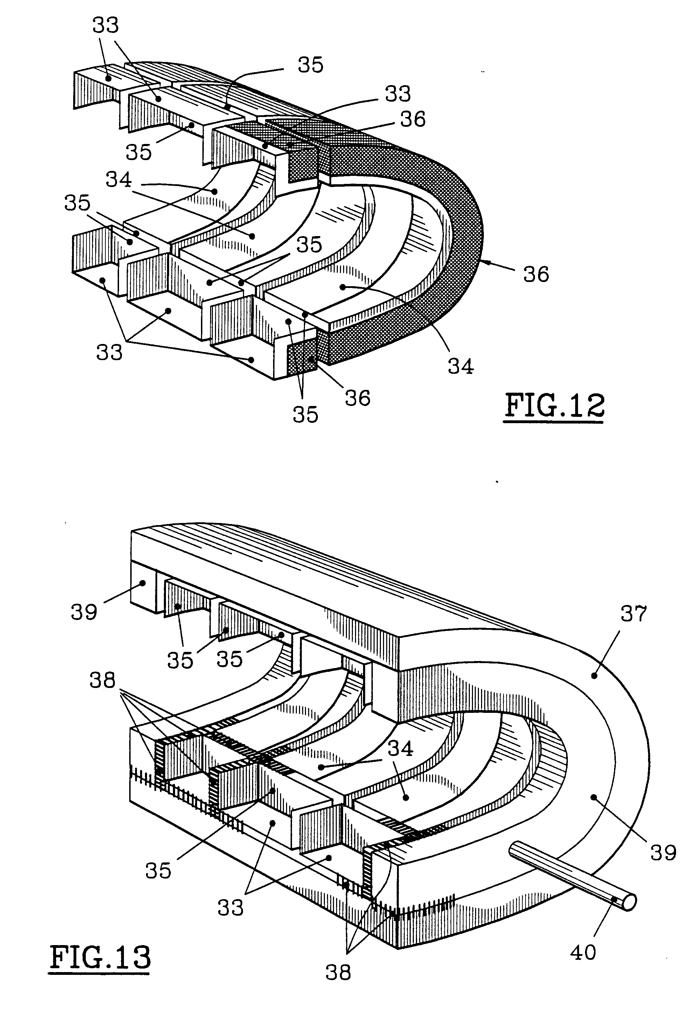

Les figures 12 et 13 illustrent une variante de l'outillage des figures 9 et 10 pour la réalisation d'une pièce du type représenté en figure 11 comportant des nervures longitudinales 31 et des nervures transversales 32 qui obligent à adjoindre, pour réaliser ces nervures transversales, des éléments complémentaires 33 dans le prolongement des profilés 34 destinés aux autres nervures. En outre, les extrémités en regard des éléments et profilés 33, 34 comportent des bords relevés 35 pour définir lesdites nervures transversales 32.

Les éléments 33, 34 sont drapés (36) sur leur face externe et sur la face externe des bords 35 et l'ensemble est placé dans un dispositif 37 à 40 correspondant respectivement au dispositif 27 à 30 de la figure 10.

Les figures 6 et 7 représentent en 1' respectivement une pièce cylindrique et un panneau, munis intérieurement de nervures de renfort 44.

Le moule de la figure 13 s'utilise de la même manière que le moule de la figure 10.

Le procédé de l'invention permet bien entendu de réaliser des pièces plus simples de forme.

Les pièces obtenues conformément au procédé sont des pièces composites dites "chaudes" pouvant être utilisées en continu à des températures de l'ordre de 1000°C et conservant à ces températures des caractéristiques mécaniques élevées.

## Revendications

1. Procédé de réalisation de pièces de tôlerie complexes en matériau composite, constituées d'un élément monobloc comportant au moins deux parties d'épaisseur relativement mince, incurvées et/ou planes et formant entre elles un angle, quel procédé consiste :
- à réaliser un moule complexe comprenant un élément rigide (3,20,27,29) et un élément déformable (10,12 à 18, 25,33,34), tous deux de forme complémentaire correspondant à la pièce finale,
- à réaliser par drapage sur l'un des deux éléments dudit moule, une préforme (6,19,26,36) de la pièce à obtenir, à l'aide de fibres pré-imprégnées d'une résine vitreuse ou vitro-céramique,
- à assembler de manière étanche les deux éléments du moule pour former une enceinte contenant ladite pré-forme,
- à soumettre l'ensemble à une élévation contrôlée de la température jusqu'à une valeur pouvant atteindre 1500°C et la pression jusqu'à une valeur pouvant atteindre 1000 bars, en sorte de plaquer la pré-forme contre l'élément rigide du moule,
- puis, à ramener les pression et température aux valeurs ambiantes, de manière contrôlées en sorte d'obtenir une vitrification ou céramisation optimale,
- et enfin, à démouler la pièce ainsi obtenue.

2. Procédé suivant la revendication 1, plus particulièrement destiné à la réalisation d'une pièce (1) comprenant une partie d'épaisseur relativement mince, incurvée ou plane, et une ou plusieurs nervures sur l'une des faces de ladite partie, quel procédé consiste :
- à draper sur l'élément rigide (3) dudit moule ladite partie d'épaisseur relativement mince,
- puis, à mettre en place également par drapage sur ladite partie la ou les nervures (7),
- à mettre en place sur l'élément rigide (3) ledit élément déformable (10), constituée d'une feuille mince conformée pour épouser la ou les nevures,
- et, à effectuer lesdites opérations de pressage à hautes pression et température.

3. Procédé suivant la revendication 1, plus particulièrement destiné à l'obtention d'une pièce comportant un ou plusieurs compartiments ouverts ou fermés, quel procédé consiste :
- pour chaque compartiment, à réaliser un drapage sur un support mince déformable (12 à 18, 25, 33, 34) constituant une partie de l'élément déformable du moule complexe,
- puis, à disposer les supports drapés côte à côte et à les assembler au droit de leurs parties non drapées avec ledit élément rigide (20, 27, 37) du moule,
- et à effectuer lesdites opérations de pressage à hautes pression et température.

4. Procédé suivant l'une des revendications 1 à 3, dans lequel l'espace entre les deux éléments, rigide (3,20,27,37) et déformable (10,12 à 18, 25, 35), du moule est susceptible d'être relié à une source de vide pour réaliser un compactage des fibres drapées et une pyrolyse pour éliminer les liants de la résine, avant la soumission auxdites élévations contrôlées de température et pression.

5. Outillage utilisable dans la mise en oeuvre du procédé suivant l'une des revendications 1 à 4, constitué d'un moule complexe comprenant une partie rigide (3,20,27,37) et une ou plusieurs parties déformables (10,12 à 18,25,35) constituées d'une feuille mince, les parties rigides et déformables étant susceptibles d'être assemblées de manière étanche en formant entre elles un volume correspondant aux formes et dimensions de la pièce, un conduit (9,22,30,40) étant prévu pour relier l'intérieur du moule avec une source de vide.

6. Outillage suivant la revendication 5, dans lequel les différentes parties du moule sont métalliques et assemblables par soudage

7. Pièce de tôlerie complexe en matériau composite constituée d'un élément monobloc comportant au moins deux parties d'épaisseur relativement mince, incurvées et/ou planes et formant entre elles un angle, obtenue conformément au procédé selon l'une quelconque des revendications 1 à 4.

## Patentansprüche

1. Verfahren zum Herstellen von komplexen Blechteilen aus Verbundmaterial, die aus einem Einzelblockelement gebildet sind, das wenigstens zwei gekrümmte und/oder ebene Teile mit verhältnismäßig geringer Dicke umfaßt, die miteinander einen Winkel bilden, wobei das Verfahren darin besteht:
- eine komplexe Form herzustellen, die ein starres Element (3, 20, 27, 29) und ein verformbares Element (10, 12 bis 18, 25, 33, 34) umfaßt, die beide eine dem endgültigen Teil entsprechende komplementäre Form aufweisen,
- durch Aufziehen auf eines der beiden Elemente der Form einen Vorformling (6, 19, 26, 36) des zu erhaltenden Teils mit Hilfe vorimprägnierter Fasern eines glasartigen oder glaskeramikartigen Harzes herzustellen,
- die beiden Elemente der Form dicht zu verbinden, um einen den Vorformling enthaltenden Behälter zu bilden,
- die Einheit einer kontrollierten Temperaturerhöhung bis zu einem Wert, der 1500 °C erreichen kann, und einer kontrollierten Druckerhöhung bis zu einem Wert, der 1000 Bar erreichen kann, zu unterwerfen, um den Vorformling gegen das starre Element der Form zu drücken,
- dann den Druck und die Temperatur kontrolliert auf Umgebungswerte zurückzustellen, um eine optimale Verglasung oder Keramisierung zu erhalten,
- und schließlich das auf diese Weise erhaltene Teil aus der Form zu entnehmen.

2. Verfahren nach Anspruch 1, das insbesondere für die Herstellung eines Teils (1) bestimmt ist, das einen gekrümmten oder ebenen Abschnitt mit verhältnismäßig geringer Dicke sowie auf einer der Flächen des Abschnitts eine oder mehrere Rippen umfaßt, wobei das Verfahren darin besteht:
- den Abschnitt mit verhältnismäßig geringer Dicke auf das starre Element (3) der Form aufzuziehen,
- dann die Rippe(n) (7) ebenfalls durch Aufziehen auf dem Abschnitt anzuordnen,
- am starren Element (3) das verformbare Element (10) anzuordnen, das aus einer dünnen Folie gebildet ist, die sich an die Rippe(n) anschmiegen kann, und
- dann die Preßvorgänge mit hohem Druck und hoher Temperatur auszuführen.

3. Verfahren nach Anspruch 1, das insbesondere dazu bestimmt ist, ein Teil zu erhalten, das ein oder mehrere offene oder geschlossene Fächer aufweist, wobei das Verfahren darin besteht:
- für jedes Fach ein Aufziehen auf einen verformbaren dünnen Träger (12 bis 18, 25, 33, 34), der einen Abschnitt des verformbaren Elements der komplexen Form bildet, auszuführen,
- dann die bezogenen Träger nebeneinander anzuordnen und sie am Ort ihrer nicht bezogenen Abschnitte mit dem starrten Element (20, 27, 37) der Form zu verbinden,
- und die Preßvorgänge mit hohem Druck und hoher Temperatur auszuführen.

4. Verfahren nach einem der Ansprüche 1 bis 3, bei dem der Raum zwischen den beiden Elementen der Form, d. h. zwischen dem starren Element (3, 20, 27, 37) und dem verformbaren Element (10, 12 bis 18, 25, 35), mit einer Unterdruckquelle verbunden werden kann, um eine kompakte Fixierung der aufgezogenen Fasern und eine Pyrolyse auszuführen, um die Bindemittel des Harzes zu entfernen, bevor es den kontrollierten Erhöhungen der Temperatur und des Drucks unterworfen wird.

5. Werkzeug, das bei der Ausführung des Verfahrens nach einem der Ansprüche 1 bis 4 verwendbar ist und gebildet ist aus einer komplexen Form, die einen starren Abschnitt (3, 20, 27, 37) und einen oder mehrere verformbare Abschnitte (10, 12 bis 18, 25, 35), die aus einer dünnen Folie gebildet sind, umfaßt, wobei die starren und die verformbaren Abschnitte dicht verbunden werden können, indem sie zwischen sich ein Volumen bilden, das den Formen und Abmessungen des Teils entspricht, wobei eine Leitung (9, 22, 30, 40) vorgesehen ist, um den Innenraum der Form mit einer Unterdruckquelle zu verbinden.

6. Werkzeug nach Anspruch 5, in dem die verschiedenen Abschnitte der Form metallisch sind und durch Verschweißen verbunden werden können.

7. Komplexes Blechteil aus Verbundmaterial, das aus einem Einzelblokkelement gebildet ist, das wenigstens zwei gekrümmte und/oder ebene Abschnitte mit verhältnismäßig geringer Dicke umfaßt, die miteinander einen Winkel bilden, und das mit dem Verfahren nach einem der Ansprüche 1 bis 4 erhalten wird.

## Claims

1. Method of producing complex sheet pieces made of composite material, consisting of a single-piece element having at least two relatively thin parts, curved and/or flat, and forming an angle between them, said method comprising:
- producing a complex mould comprising a rigid element (3, 20, 27, 29) and a deformable element (10, 12 to 18, 25, 33, 34), both with complementary shapes corresponding to the final piece,
- producing, by draping on one of the two elements of said mould, a preform (6, 19, 26, 36) of the piece to be obtained, using fibres preimpregnated with a vitreous or vitro-ceramic resin,
- sealingly assembling the two elements of the mould in order to form an enclosure containing said preform,
- subjecting the assembly to a controlled rise in temperature up to a value which may attain 1500°C and in pressure up to a value which may attain 1000 bars, so as to press the preform against the rigid element of the mould,
- then returning the pressure and temperature to ambient values, in a controlled manner, so as to obtain optimum vitrification or ceramisation,
- and finally removing the piece thus obtained from the mould.

2. Method according to Claim 1, more particularly intended for producing a piece (1) comprising a relatively thin part, curved or flat, and one or more ribs on one of the faces of said part, said method comprising:
- draping said relatively thin part on the rigid element (3) of said mould,
- then putting the rib or ribs (7) in place also by draping on said part,
- putting said deformable element (10), consisting of a thin sheet shaped so as to match the rib or ribs, in place on the rigid element (3),
- and performing said operations of pressing at high pressure and temperature.

3. Method according to Claim 1, more particularly intended for obtaining a piece having one or more open or closed compartments, said method comprising:
- for each compartment, effecting a draping on a thin deformable support (12 to 18, 25, 33, 34) constituting a part of the deformable element of the complex mould,
- then disposing the draped supports side by side and assembling them in line with their non-draped parts with said rigid element (20, 27, 37) of the mould,
- and performing said operations of pressing at high pressure and temperature.

4. Method according to one of Claims 1 to 3, in which the space between the two elements, rigid (3, 20, 27, 37) and deformable (10, 12 to 18, 25, 35), of the mould is able to be connected to a vacuum source in order to effect a compacting of the draped fibres and a pyrolysis in order to eliminate the binders in the resin, before subjecting to said controlled rises in temperature and pressure.

5. Tooling which can be used in the implementation of the method according to one of Claims 1 to 4, comprising a complex mould comprising a rigid part (3, 20, 27, 37) and one or more deformable parts (10, 12 to 18, 25, 35) consisting of a thin sheet, the rigid and deformable parts being able to be assembled sealingly whilst forming between them a volume corresponding to the shapes and dimensions of the piece, a pipe (9, 22, 30, 40) being provided for connecting the interior of the mould with a vacuum source.

6. Tooling according to Claim 5, in which the different parts of the mould are metallic and able to be assembled by welding.

7. Complex sheet piece made of composite material comprising a single-piece element having at least two relatively thin parts, curved and/or flat, and forming an angle between them, obtained in accordance with the method according to any one of Claims 1 to 4.
